# EUROPÄISCHE PATENTANMELDUNG

(11) **EP 2 554 872 A2**
(43) Veröffentlichungstag der Anmeldung: **06.02.2013**
(21) Anmeldenummer: 12005152.9
(22) Anmeldetag: 12.07.2012
(51) Int. Cl.: F16F 13/24

(54) **Hydraulisch dämpfendes Lager und Kraftfahrzeug damit**

(30) Priorität: 02.08.2011 DE 102011109128
(71) Anmelder: Carl Freudenberg KG, 69469 Weinheim (DE)
(72) Erfinder: Wittmershaus, Volker, 69488 Birkenau (DE)

(57) **Zusammenfassung**

Hydraulisch dämpfendes Lager, umfassend ein Traglager (1) und ein Auflager (2), die durch einen hohikegeiförmigen Federkörper (3) aus elastomerem Werkstoff aufeinander abgestützt sind und einen Arbeitsraum (4) und einen Ausgleichsraum (5), die mit Dämpfungsflüssigkeit (6) gefüllt sind, wobei der Arbeits- (4) und der Ausgleichsraum (5) auf ihren axial einander zugewandten Seiten durch eine mit einem Dämpfungskanal (7) versehene Trennwand (8) voneinander getrennt und durch den Dämpfungskanal (7) flüssigkeitsleitend miteinander verbunden sind.

Das Traglager (1) ist im Wesentlichen doppel-T-förmig ausgebildet, mit zwei kreisringförmig ausgebildeten Radialflanschen (9, 10), die einander mit axialem Abstand benachbart zugeordnet sind und das Lager stimseitig beiderseits begrenzen wobei die Radialflansche (9, 10) durch ein zentral angeordnetes Verbindungsrohr (11) miteinander verbunden sind und wobei die Trennwand (8) ringförmig ausgebildet ist, das Verbindungsrohr (11) dichtend anliegend umschließt und mit dem Auflager (2) verbunden ist.

## Beschreibung

### Technisches Gebiet

Die Erfindung betrifft ein hydraulisch dämpfendes Lager, umfassend ein Traglager und ein Auflager, die durch einen hohlkegelförmigen Federkörper aus elastomerem Werkstoff aufeinander abgestützt sind und einen Arbeitsraum und einen Ausgleichsraum, die mit Dämpfungsflüssigkeit gefüllt sind, wobei der Arbeits- und der Ausgleichsraum auf ihren axial einander zugewandten Seiten durch eine mit einem Dämpfungskanal versehene Trennwand voneinander getrennt und durch den Dämpfungskanal flüssigkeitsleitend miteinander verbunden sind.

### Stand der Technik

Solche Lager sind allgemein bekannt und gelangen beispielsweise als Aggregatelager zur Anwendung. Dabei wird z. B. eine Verbrennungskraftmaschine mittels der Aggregatelager auf einem Fahrgestell eines Kraftfahrzeugs abgestützt. Das Traglager wird bei den vorbekannten Aggregatelagern zumeist durch einen stirnseitig nur einerseits angeordneten zentralen Kern gebildet, der mit dem Federkörper verbunden ist. Axial andererseits ist der Federkörper auf einem im Wesentlichen topfförmigen Auflager abgestützt, dessen Boden z. B. mit einem zentral angeordneten Gewindebolzen zur Befestigung des Aggregatelagers versehen ist. Die Trennwand der vorbekannten Aggregatelager ist scheibenförmig ausgebildet und in axialer Richtung beiderseits von der Dämpfungsflüssigkeit im Arbeits- und Ausgleichsraum auf der gesamten scheibenförmigen Oberfläche beaufschlagbar.

### Darstellung der Erfindung

Der Erfindung liegt die Aufgabe zugrunde, ein Lager der vorbekannten Art derart weiterzuentwickeln, dass es auch für andere Anwendungen Verwendung finden kann, insbesondere für Anwendungen, bei denen eine mittig durchgehende Verschraubung des Lagers erfordertich/wünschenswert ist.

Diese Aufgabe wird erfindungsgemäß durch ein hydraulisch dämpfendes Lager gemäß Anspruch 1 gelöst. Auf vorteilhafte Ausgestaltungen nehmen die auf Anspruch 1 rückbezogenen Ansprüche Bezug.

Zur Lösung der Aufgabe ist es vorgesehen, dass das Traglager im Wesentlichen doppel-T-förmig mit zwei kreisringförmig ausgebildeten Radialflanschen ausgebildet ist, die einander mit axialem Abstand benachbart zugeordnet sind und das Lager stirnseitig beiderseits begrenzen und dass die Radialflansche durch ein zentral angeordnetes Verbindungsrohr miteinander verbunden sind und dass die Trennwand ringförmig ausgebildet ist, das Verbindungsrohr dichtend anliegend umschließt und mit dem Auflager verbunden ist.

Durch eine derartige Ausgestaltung besteht die Möglichkeit, das erfindungsgemäße Lager durch eine das Lager mittig durchdringende Verschraubung mit dem doppel-T-förmigen Traglager an einem der zu entkoppelnden Bauteile zu befestigen, während das andere Bauteil mit dem Auflager verbunden wird.

Die das Lager mittig durchdringende Verschraubung ist für manche Anwendungsfälle, zum Beispiel für die Lagerung einer Fahrzeugkabine, bauartbedingt notwendig, damit das zu lagernde Bauteil, zum Beispiel eine Fahrzeugkabine, von "unten" verschraubt werden kann.

Der Radialflansch des Traglagers, der auf der dem Arbeitsraum axial abgewandten Seite des Ausgleichsraums angeordnet ist, übernimmt eine Anschlagsfunktion beim Ausfedern des zu lagernden Bauteils, zum Beispiel einer Fahrzeugkabine, insbesondere bei einem Frontalcrash.

Zur innenumfangsseitigen Abdichtung der ringförmigen Trennwand am Außenumfang des Verbindungsrohres ist es vorgesehen, dass die Trennwand innenumfangsseitig eine Membran umfasst, die das Verbindungsrohr dichtend anliegend umschließt. Die Membran kann dabei, in Abhängigkeit vom jeweiligen Anwendungsfall, aus einem relativ harten Gummi bestehen oder aus einem relativ weicheren elastomeren Werkstoff oder aus einem polymeren Werkstoff. Bei der Auswahl des Werkstoffs der Membran ist zu berücksichtigen, dass die Membran einerseits eine gute Dichtwirkung gegenüber dem Verbindungsrohr aufweisen sollte und außerdem eine gute Dauerhaltbarkeit, auch deshalb, weil die Membran gemäß einer vorteilhaften Ausgestaltung das Verbindungsrohr in axialer Richtung relativ verschiebbar anliegend umschließt. Diese relative Verschiebbarkeit ergibt sich dadurch, dass die Membran, die einen Bestandteil der Trennwand bildet, durch den Dämpfungskanal im Wesentlichen ortsfest mit dem Auflager verbunden ist und dass das Verbindungsrohr, das einen Bestandteil des Traglagers bildet, relativ beweglich zur Membran ist. Eine Verbindung zwischen dem Traglager und dem Auflager besteht ausschließlich durch den Federkörper aus elastomerem Werkstoff, um eine möglichst gute Schwingungsentkopplung zwischen dem Traglager und dem Auflager zu erreichen. Für eine gute Funktion des Lagers ist es erforderlich, dass die Membran das Verbindungsrohr auch dann zuverlässig dichtend umschließt, wenn sich Traglager und Auflager relativ zueinander bewegen. Der Werkstoff, aus dem die Membran besteht, muss deshalb einerseits eine ausreichend große Beständigkeit gegen abrassiven Verschleiß aufweisen und andererseits eine ausreichend große Elastizität während einer langen Gebrauchsdauer.

Die Membran kann außenumfangsseitig mit dem Dämpfungskanal im Wesentlichen flüssigkeitsdicht verbunden sein. Zur wirkungsvollen Dämpfung von Schwingungen ist es zweckmäßig, dass die Dämpfungsflüssigkeit im Arbeits- und Ausgleichsraum möglichst vollständig durch den Dämpfungskanal hin und her gepumpt wird. Undichtigkeiten würden einen Bypass zwischen Arbeitsraum und Ausgleichsraum bewirken. Ein Teil der Dämpfungsflüssigkeit würde durch den Bypass zwischen Arbeitsraum und Ausgleichsraum hin und her bewegt, würde sich deshalb nicht durch den Dämpfungskanal bewegen und dadurch die Dämpfungswirkung verschlechtern.

Es kann vorgesehen sein, dass die Membran aussenumfangsseitig einen ringförmigen sich radial erstreckenden Befestigungsflansch aufweist, der in axialer und/oder radialer Richtung relativ beweglich mit dem Dämpfungskanal verbunden ist. Dadurch werden die mechanischen Belastungen auf den Befestigungsflansch der Membran auch dann auf einem niedrigen Niveau gehalten, wenn sich Traglager und Auflager während der bestimmungsgemäßen Verwendung des Lagers häufig relativ zueinander bewegen. Die Membran und somit auch das Lager weisen dadurch gleichbleibend gute Gebrauchseigenschaften während einer langen Gebrauchsdauer auf. Die Ermüdung des Werkstoffs, aus dem die Membran besteht, ist dadurch auf ein Minimum begrenzt.

Gemäß einer vorteilhaften Ausgestaltung kann es vorgesehen sein, dass der Dämpfungskanal zumindest doppelstöckig ausgebildet ist. Weiter bevorzugt ist der Dämpfungskanal dreistöckig ausgebildet. Die Mehrstöckigkeit des Dämpfungskanals ist vorgesehen, um eine ausreichend große Länge des Dämpfungskanals und dadurch ein ausreichend großes Flüssigkeitsvolumen der Dämpfungsflüssigkeit innerhalb des Dämpfungskanals zu erhalten. Tieffrequente, großamplitudige Schwingungen können dadurch wirkungsvoll gedämpft werden.

Der Dämpfungskanal kann eine sich radial nach innen erstreckende gabelförmige Aufnahme für den Befestigungsflansch aufweisen. Durch diese gabelförmige Aufnahme ist die Membran in axialer und radialer Richtung gut geführt und liegt dadurch stets mit im Wesentlichen übereinstimmender elastischer Vorspannung am Außenumfang des Verbindungsrohrs an. Sowohl beim Einfedern als auch beim Ausfedern des Lagers ist die räumliche Zuordnung des Befestigungsflansches in der gabelförmigen Aufnahme praktisch konstant.

Die Aufnahme kann eine obere, axial zum Arbeitsraum hin angeordnete und eine untere, axial zum Ausgleichsraum hin angeordnete, jeweils mit Durchbrechungen ausgebildete Düsenscheibe umfassen. Durch die Durchbrechungen hindurch ist der Befestigungsflansch der Membran mit Dämpfungsflüssigkeit aus den axial angrenzenden Räumen beaufschlagbar. Entsprechend den Membranen in den Trennwänden von Aggregatelagern können dadurch zusätzlich höherfrequente Schwingungen innerhalb des Lagers isoliert werden.

Das Auflager und der Dämpfungskanal sind im Wesentlichen ortsfest zueinander angeordnet. Die Abdichtung des Dämpfungskanals kann z. B. dadurch erfolgen, dass sich der elastomere Werkstoff, aus dem auch der Federkörper besteht, innenumfangsseitig am Auflager entlang erstreckt und den außenumfangsseitigen flüsslgkeitsdichten Verschluss eines radial nach außen offenen Dämpfungskanals bewirkt. Außerdem ist hierbei von Vorteil, dass fertigungsbedingte Toleranzen durch die Elastomerspur, die sich zwischen dem Auflager und dem Dämpfungskanal erstreckt, ausgeglichen werden. Das Lager ist dadurch einfach und kostengünstig herstellbar.

Zwischen dem Traglager und dem Auflager kann zur Begrenzung relativer axialer Verlagerungen der beiden Teile zueinander zumindest ein Anschlagpuffer vorgesehen sein. Durch die Begrenzung unerwünscht großer relativer axialer Verlagerungen von Traglager und Auflager zueinander wird die mechanische Belastung des Federkörpers reduziert und die Gefahr einer Beschädigung/Zerstörung des Federkörpers minimiert. Das erfindungsgemäße Lager weist dadurch eine große Standzeit auf.
Außerdem hat die Verwendung eines Anschlagpuffers im Lager den Vorteil, dass auch bei Extremauslenkungen zwischen Traglager und Auflager laute Anschlaggeräusche vermieden werden.

Der Anschlagpuffer kann aus einem elastomerem Werkstoff bestehen und einstückig ineinander übergehend und materialeinheitlich mit dem Federkörper ausgebildet sein. Das Lager weist dadurch einen einfachen und teilearmen Aufbau auf, was hinsichtlich einer kostengünstigen und einfachen Fertigung von hervorzuhebendem Vorteil ist.

Außerdem betrifft die Erfindung ein Kraftfahrzeug, umfassend eine Kabine und ein Fahrgestell, wobei die Kabine gegenüber dem Fahrgestell durch eine Lagerung schwingungsentkoppelt abgestützt ist.

Solche schwingungsentkoppelten Lagerungen für Kabinen von Kraftfahrzeugen sind allgemein bekannt. Die Lagerung umfasst dabei Lager, die als einfache Gummi-Metall-Teile ausgebildet sind.

Der Erfindung liegt die Aufgabe zugrunde, ein Fahrzeug der vorbekannten Art derart weiterzuentwickeln, dass während der bestimmungsgemäßen Verwendung des Kraftfahrzeugs die Dämpfung der Kabine gegenüber dem Fahrgestell verbessert wird.

Dazu ist es vorgesehen, dass die Lagerung zumindest ein Lager, wie zuvor beschrieben, umfasst. Kabinen, die gegenüber dem Fahrgestell schwingungsentkoppelt sind, kommen häufig in Nutzfahrzeugen zur Anwendung. Dazu kann es vorgesehen sein, dass die Lagerung durch vier so genannte Kabinenlager gebildet ist, wobei zumindest die - in Fahrtrichtung betrachtet - am hinteren Kabinenende angeordneten Lager erfindungsgemäße hydraulisch dämpfende Lager sind. Die vorderen Kabinenlager können entweder durch konventionelle Gummi-Metall-Lager gebildet sein, zur weiteren Verbesserung der Gebrauchseigenschaften besteht jedoch die Möglichkeit, auch die vorderen Kabinenlager erfindungsgemäß auszubilden.

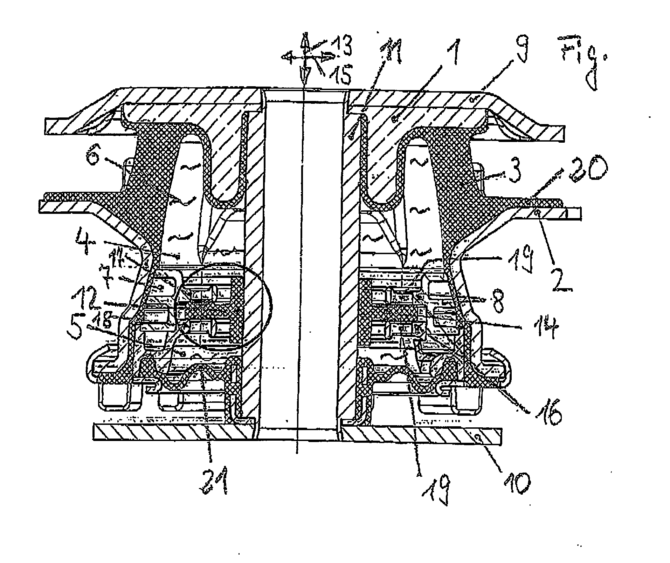

### Kurzbeschreibung der Zeichnung

Ein Ausführungsbeispiel eines hydraulisch dämpfenden Lagers ist in der Figur dargestellt und wird nachfolgend näher beschrieben.

### Ausführung der Erfindung

In der Figur ist ein hydraulisch dämpfendes Lager gezeigt, das als Kabinenlager für ein Kraftfahrzeug verwendet wird. Dabei ist das Lager zur Schwingungsentkopplung zwischen der Kabine und dem Fahrgestell eines Kraftfahrzeugs angeordnet.

Das erfindungsgemäße hydraulisch dämpfende Lager umfasst ein Traglager 1, das doppel-T-förmig ausgebildet ist. Die beiden Radialflansche 9, 10, die jeweils kreisringförmig ausgebildet sind, sind mit der Kabine eines hier nicht dargestellten Kraftfahrzeugs verbunden und durch das Verbindungsrohr 11 starr aneinander festgelegt. Innerhalb des axialen Abstands zwischen den beiden Radialflanschen 9, 10 ist das Auflager 2 angeordnet, das mittels des hohlkegelförmigen Federkörpers 3, der aus einem elastomeren Werkstoff besteht, mit dem oberen Radialflansch 9 verbunden ist.

Innerhalb des Lagers befinden sich der Arbeitsraum 4 und der Ausgleichsraum 5, die durch die Trennwand 8 voneinander getrennt und durch den Dämpfungskanal 7, der einen Bestandteil der Trennwand 8 bildet, flüssigkeitsleitend miteinander verbunden sind. Der Arbeitsraum 4 wird im Wesentlichen durch den oberen Radialflansch 9, den Federkörper 3 und die Trennwand 8 begrenzt, der Ausgleichsraum 5 durch die Trennwand 8 und eine im Wesentlichen drucklos Volumen aufnehmende Abschlussmembran 21, die aus einem gummielastischen Werkstoff besteht und rollbalgförmig ausgebildet ist.

Um eine mittig durchgehende Verschraubung durch das Lager zu ermöglichen, ist das Verbindungsrohr 11 vorgesehen, das zur gegenseitigen Abgrenzung von Arbeitsraum 4 und Ausgleichsraum 5 von der Membran 12 in axialer Richtung relativ verschiebbar und trotzdem dichtend umschlossen ist.

Zur Funktion des Lagers wird folgendes ausgeführt: Das Traglager 1, das doppel-T-förmig ausgebildet ist und die Radialflansche 9, 10 und das zwischen diesen Radialflanschen 9, 10 angeordnete Verbindungsrohr 11 umfasst, ist mit der hier nicht dargestellten Kabine eines Kraftfahrzeugs verbunden.
Das Auflager 2 ist demgegenüber am Fahrgestell des Kraftfahrzeugs festgelegt. Das Traglager 1 und das Auflager 2 sind durch den Federkörper 3 schwingungsentkoppelt miteinander verbunden.

Werden während der bestimmungsgemäßen Verwendung des Lagers z. B. Schwingungen in axialer Richtung 13 vom oberen Radialflansch 9 in Richtung des unteren Radialflansches 10 in das Lager eingeleitet, bewegt sich der obere Radialflansch 9 auf das Auflager 2 zu und der Federkörper 3 wird gestaucht. Dabei verkleinert sich das Volumen des Arbeitsraums 4 und Dämpfungsflüssigkeit 6 wird durch den hier dreistöckigen Dämpfungskanal 7 durch die Trennwand 8 hindurch in Richtung des Ausgleichsraums 5 verlagert, wobei sich die Abschlussmembran 21 zur Aufnahme des zusätzlichen Volumens aus dem Arbeitsraum 4 in Richtung des unteren Radialflanschs 10 axial vorwölbt.
Federt anschließend die Kabine bezogen auf das Fahrgestell wieder aus, wird die beim Einfedern in den Ausgleichsraum 5 gepumpte Dämpfungsflüssigkeit 6 durch den dreistöckigen Dämpfungskanal 7 wieder zurück in den Arbeitsraum 4 gefördert.
Bei Verlagerung der Dämpfungsflüssigkeit 6 durch den Dämpfungskanal 7 hindurch erfolgt jeweils eine Dämpfung der in das Lager eingeleiteten Schwingungen.

Bei der Relativverlagerung des Traglagers 1 zum Auflager 2 sowohl in axialer als auch in radialer Richtung muss sichergestellt sein, dass die Trennwand 8 das Verbindungsrohr 11 mittels der Membran 12 stets dichtend anliegend umschließt.
Zwischen der Innenumfangsfläche der Membran 12 und der Außenumfangsfläche des Verbindungsrohrs 11 kann eine axiale Relativbewegung erfolgen. Die Membran 12 besteht deshalb bevorzugt aus einem Material, das einerseits eine gute Abdichtung ermöglicht und andererseits auch bei häufiger Relativbewegung zum Verbindungsrohr 11 nur einen geringen Verschleiß aufweist. Die Membran 12 kann zum Beispiel aus einem relativ harten Gummi bestehen.
Bei einer radialen Relatiwerlagerung des Traglagers 1 zum Auflager 2 bewegt sich der Befestigungsflansch 14 der Membran 12 innerhalb der gabelförmigen Aufnahme 16, die einen einstückigen Bestandteil des Dämpfungskanals 7 bildet, in radialer Richtung hin und her, wobei der Befestigungsflansch 14, in Abhängigkeit vom jeweiligen Anwendungsfall, zur Isolierung höherfrequenter Schwingungen in axialer und/oder radialer Richtung relativbeweglich und trotzdem im Wesentlichen flüssigkeitsdicht in der gabelförmigen Aufnahme 16 angeordnet sein kann.

Im hier dargestellten Ausführungsbeispiel ist ein Anschlagpuffer 20 zur Begrenzung von unerwünscht großen axialen Auslenkbewegungen des Traglagers 1 relativ zum Auflager 2 vorgesehen, wobei der Anschlagpuffer 20 einstückig ineinander übergehend und materialeinheitlich mit dem Federkörper 3 ausgebildet ist.
Durch den Anschlagpuffer 20 können einerseits unerwünscht große mechanische Belastungen des Federkörpers 3 vermieden werden und andererseits Anschlaggeräusche, die ohne den Anschlagpuffer 20 beim Anschlagen des Traglagers 1 auf dem Auflager 2 entstehen würden.

## Patentansprüche

1. Hydraulisch dämpfendes Lager, umfassend ein Traglager (1) und ein Auflager (2), die durch einen hohlkegelförmigen Federkörper (3) aus elastomerem Werkstoff aufeinander abgestützt sind und einen Arbeitsraum (4) und einen Ausgleichsraum (5), die mit Dämpfungsflüssigkeit (6) gefüllt sind, wobei der Arbeits- (4) und der Ausgleichsraum (5) auf ihren axial einander zugewandten Seiten durch eine mit einem Dämpfungskanal (7) versehene Trennwand (8) voneinander getrennt und durch den Dämpfungskanal (7) flüssigkeitsleitend miteinander verbunden sind, **dadurch gekennzeichnet, dass** das Traglager (1) im Wesentlichen doppel-T-förmig ausgebildet ist, mit zwei kreisringförmig ausgebildeten Radialflanschen (9, 10), die einander mit axialem Abstand benachbart zugeordnet sind und das Lager stirnseitig beiderseits begrenzen und dass die Radialflansche (9, 10) durch ein zentral angeordnetes Verbindungsrohr (11) miteinander verbunden sind und dass die Trennwand (8) ringförmig ausgebildet ist, das Verbindungsrohr (11) dichtend anliegend umschließt und mit dem Auflager (2) verbunden ist

2. Lager nach Anspruch 1, **dadurch gekennzeichnet, dass** die Trennwand (8) innenumfangsseitig eine Membran (12) umfasst, die das Verbindungsrohr (11) dichtend anliegend umschließt.

3. Lager nach Anspruch 2, **dadurch gekennzeichnet, dass** die Membran (12) das Verbindungsrohr (11) in axialer Richtung (13) relativ verschiebbar anliegend umschließt.

4. Lager nach einem der Ansprüche 2 oder 3, **dadurch gekennzeichnet, dass** die Membran (12) aussenumfangsseitig mit dem Dämpfungskanal (7) im Wesentlichen flüssigkeitsdicht verbunden ist.

5. Lager nach einem der Ansprüche 2 bis 4, **dadurch gekennzeichnet, dass** die Membran (12) aussenumfangsseitig einen ringförmigen, sich radial erstreckenden Befestigungsflansch (14) aufweist, der in axialer (13) und/oder radialer Richtung (15) relativ beweglich mit dem Dämpfungskanal (7) verbunden ist.

6. Lager nach einem der Ansprüche 1 bis 5, **dadurch gekennzeichnet, dass** der Dämpfungskanal (7) zumindest doppelstöckig ausgebildet ist.

7. Lager nach einem der Ansprüche 1 bis 6, **dadurch gekennzeichnet, dass** der Dämpfungskanal (7) eine sich radial nach innen erstreckende gabelförmige Aufnahme (16) für den Befestigungsflansch (14) aufweist.

8. Lager nach Anspruch 7, **dadurch gekennzeichnet, dass** die Aufnahme (16) eine obere (17), axial zum Arbeitsraum (4) hin angeordnete und eine untere (18), axial zum Ausgleichsraum (5) hin angeordnete, jeweils mit Durchbrechungen (19) ausgebildete Düsenschreibe umfasst.

9. Lager nach einem der Ansprüche 1 bis 8, **dadurch gekennzeichnet, dass** das Auflager (2) und der Dämpfungskanal (7) im Wesentlichen ortsfest zueinander angeordnet sind.

10. Lager nach einem der Ansprüche 1 bis 9, **dadurch gekennzeichnet, dass** zwischen dem Traglager (1) und dem Auflager (2) zur Begrenzung relativer axialer Verlagerungen der beiden Teile (1, 2) zueinander zumindest ein Anschlagpuffer (20) angeordnet ist.

11. Lager nach Anspruch 10, **dadurch gekennzeichnet, dass** der Anschlagpuffer (20) aus einem elastomerem Werkstoff besteht und einstückig ineinander übergehend und materialeinheitlich mit dem Federkörper (3) ausgebildet ist.

12. Kraftfahrzeug, umfassend eine Kabine und ein Fahrgestell, wobei die Kabine gegenüber dem Fahrgestell durch eine Lagerung schwingungsentkoppelt abgestützt ist, **dadurch gekennzeichnet, dass** die Lagerung zumindest ein Lager nach einem der Ansprüche 1 bis 11 umfasst.
